# EUROPÄISCHE PATENTSCHRIFT

(11) **EP 2 981 951 B1**
(45) Veröffentlichungstag und Bekanntmachung des Hinweises auf die Patenterteilung: **01.01.2020**
(21) Anmeldenummer: 14705095.9
(22) Anmeldetag: 12.02.2014
(51) Int. Cl.: B60W 50/12, G01C 21/34, B60W 50/00, B60W 50/04, G08G 1/01, B62D 15/02, B60W 30/182, G05D 1/00, G05D 1/02, G08G 1/0967

(54) **AUTOMATISCHES BEFAHREN EINER STRECKE**
AUTOMATIC TRAVELLING OF A ROUTE
PARCOURS AUTOMATIQUE D'UN TRAJET

(30) Priorität: 03.04.2013 DE 102013205840
(43) Veröffentlichungstag der Anmeldung: 10.02.2016
(73) Patentinhaber: Robert Bosch GmbH, 70442 Stuttgart (DE)
(72) Erfinder: FAUSTEN, Michael, 71679 Asperg (DE)
(86) Internationale Anmeldenummer: PCT/EP2014/052681
(87) Internationale Veröffentlichungsnummer: WO 2014/161683

(56) Entgegenhaltungen:
- US-A- 5 612 883
- US-A1- 2005 004 723
- US-B1- 8 260 482
- JESSE LEVINSON ET AL: "Towards fully autonomous driving: Systems and algorithms", INTELLIGENT VEHICLES SYMPOSIUM (IV), 2011 IEEE, IEEE, 5. Juni 2011 (2011-06-05), Seiten 163-168, XP031999072, DOI: 10.1109/IVS.2011.5940562 ISBN: 978-1-4577-0890-9
- THORSTEN LUETTEL ET AL: "Autonomous Ground Vehicles Concepts and a Path to the Future", PROCEEDINGS OF THE IEEE, IEEE. NEW YORK, US, Bd. 100, Nr. Special Centennial Issue, 13. Mai 2012 (2012-05-13), Seiten 1831-1839, XP011443876, ISSN: 0018-9219, DOI: 10.1109/JPROC.2012.2189803
- "Automotive technology: Driverless cars promise to reduce road accidents, ease congestion and revolutionise transport", The Economist, Technology Quarterly: Q3 2012,, 1. September 2012 (2012-09-01), XP055116526, London Gefunden im Internet: URL:http://www.economist.com/node/21560989 /print [gefunden am 2014-05-06]
- JESSE LEVINSON ET AL: "Robust vehicle localization in urban environments using probabilistic maps", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 4372-4378, XP031743635, ISBN: 978-1-4244-5038-1
- Jesse Levinson ET AL: "Map-based Precision Vehicle Localization in Urban Environments", Proceedings of Robotics: Science and Systems, 1. Juni 2007 (2007-06-01), XP055046040, Atlanta, GA, USA Gefunden im Internet: URL:http://www.roboticsproceedings.org/rss 03/p16.pdf [gefunden am 2012-11-29]
- LEVINSON J ET AL: "Towards fully autonomous driving: Systems and algorithms", INTELLIGENT VEHICLES SYMPOSIUM (IV), 2011 IEEE, IEEE, 5 June 2011 (2011-06-05), pages 163-168, XP032415188, DOI: 10.1109/IVS.2011.5940562 ISBN: 978-1-4577-0890-9

## Beschreibung

Die Erfindung betrifft eine Technik zum automatischen Befahren einer Strecke. Insbesondere betrifft die Erfindung das automatische Befahren einer häufig befahrenen Strecke des öffentlichen Straßenverkehrs mit einem Kraftfahrzeug.

### Stand der Technik

Automatisierte Fahrfunktionen benötigen eine genaue Umgebungs- und Navigationskarte. Über den Verlauf von Straßen hinaus, der für eine Navigation bereits ausreichen kann, muss eine solche Karte auch hoch detaillierte und aktuelle Informationen bereitstellen, die für das Führen des Kraftfahrzeugs nötig sind, beispielsweise Spurinformationen, Verkehrsregelungen, aktuelle Hindernisse wie beispielsweise Baustellen, und andere. Diese Informationen müssen mit hoher geometrischer Auflösung ihrer Positionen auf einer Straße zugeordnet werden können. Solche Kartendaten sind pflegeintensiv, erfordern zu ihrer Ablage große Speicher und für ihre Verbreitung große Bandbreiten. Es ist üblich, nur einen Teil dieser Daten an Bord eines Kraftfahrzeugs unmittelbar vorzuhalten und andere Daten erst bei Bedarf anzufordern. Dabei werden die Daten üblicherweise drahtlos zwischen dem Kraftfahrzeug und einer Umgebung oder zwischen Kraftfahrzeugen im Nahbereich ausgetauscht. Es ist bisher ungeklärt, wie eine hinreichend hohe Kartenabdeckung erzielt werden kann, um ein großflächiges automatisiertes Fahren zu ermöglichen.

Für die Navigation eines Kraftfahrzeugs ist es bekannt, eine vorbestimmte Strecke in einem sogenannten Teach-in-Modus abzufahren, um die Strecke bei einer späteren automatisierten Zielführung bevorzugt verwenden zu können. Beispielsweise kann ein Pendler, der die gleiche Strecke täglich befährt, eine bestimmte Variante der Streckenführung bevorzugen.

"Towards Fully Autonomous Driving: Systems and Algorithms", Jesse Levinso et al., Intelligent Vehicles Symposium (IV), 2011 IEEE, IEEE, 5. Juni 2011 (2011-06-05), Seiten 163 - 168, ISBN 978-1-4577-0890-9, zeigt ein Verfahren um eine automatische Trajektoriensteuerung eines Kraftfahrzeus nach dem Vorbild einer manuell gefahrenen Trajektorie zu ermöglichen.

### Offenbarung der Erfindung

Der Erfindung liegt die Aufgabe zugrunde, eine Technik zum automatischen Befahren einer vorbestimmten Strecke anzugeben. Die Aufgabe wird gelöst durch ein Verfahren, ein Computerprogrammprodukt und eine Vorrichtung mit den Merkmalen der unabhängigen Ansprüche. Unteransprüche geben bevorzugte Ausführungsformen wieder.

Ein Verfahren zum automatischen Befahren einer vorbestimmten Strecke umfasst Schritte des Abtastens von Strecken- und Umgebungsinformationen mittels eines Sensors und/oder einer Abtasteinrichtung, während die Strecke manuell befahren wird zur Bestimmung einer manuellen Fahrstrategie (320), die ein Fahrer eines Kraftfahrzeugs verfolgt, während er eine vorbestimmte Strecke ohne aktive Eingriffe durch eine Vorrichtung befährt, des Planens einer automatischen Fahrstrategie für eine spätere automatisierte Zielführung mittels einer Verarbeitungseinrichtung auf der Basis der abgetasteten Informationen, des Vergleichens der automatischen Fahrstrategie mit der manuellen Fahrstrategie und des Durchführens des automatischen Befahrens der Strecke, wenn sich die automatische Fahrstrategie weniger als ein vorbestimmtes Maß von der manuellen Fahrstrategie unterscheidet.

Es wurde erkannt, dass ein üblicher Fahrer dazu tendiert, bestimmte Strecken besonders häufig zu fahren. Um den Fahrer bei seiner Fahrtätigkeit automatisiert zu entlasten, ist es erforderlich, eine automatisierte Fahrstrategie zu wählen, die auch der Fahrer selbst üblicherweise wählt. Durch das Abtasten von Strecken- und Umgebungsinformationen während des manuellen Befahrens der Strecke kann nachvollzogen werden, von welchen Parametern der Fahrer die Wahl seiner manuellen Fahrstrategie abhängig macht. Die abgetasteten Strecken- und Umgebungsinformationen können aktueller, genauer und relevanter sein als Informationen, die beispielsweise von einer zentralen Stelle bereitgestellt werden.

Dadurch kann es möglich sein, mit geringem Aufwand einerseits relevante lokale Strecken- und Umgebungsinformationen einer vorbestimmten Strecke zu bestimmen und andererseits das Fahrverhalten des Fahrers möglichst genau zu imitieren. Dadurch kann eine erhöhte Sicherheit beim automatisierten Befahren der vorbestimmten Strecke erzielt werden können.

In einer Ausführungsform wird das automatische Befahren frühestens dann ermöglicht, wenn die Strecke wenigstens einmal vollständig manuell befahren wurde. Dadurch kann verhindert werden, dass Teilstücke der Strecke in einer Weise zu einer automatisiert befahrenen Strecke zusammengesetzt werden, wie es der Fahrer selbst nicht tun würde. So kann von dem Umstand Gebrauch gemacht werden, dass der Fahrer der häufig befahrenen Strecke üblicherweise jedes Detail und jede Kombinationsmöglichkeit von Teilstrecken bereits evaluiert hat. So kann auf dezente Weise vom gesammelten Erfahrungsschatz des Fahrers Gebrauch gemacht werden.

In einer weiteren bevorzugten Ausführungsform wird die Strecke öfter als eine vorbestimmte Anzahl manuell befahren. Dadurch kann sichergestellt werden, dass es sich um eine Strecke handelt, die der Fahrer bereits selbst gut kennt, insbesondere eine Pendlerstrecke zwischen einem Wohnort und einer Arbeitsstätte. Außerdem kann durch das häufige Befahren der Strecke die Qualität der abgetasteten Strecken- und Umgebungsinformationen gesteigert werden. Einmalige, zufällige oder bedeutungslose Abweichungen von der gewünschten Fahrstrecke können so verbessert bestimmt und ignoriert werden.

In einer weiteren Ausführungsform werden aus den abgetasteten Informationen Merkmale bestimmt und die Fahrstrategie wird auf der Basis der bestimmten Merkmale bestimmt. Durch den Zwischenschritt des Bildens von Merkmalen kann einerseits verbessert nachvollzogen werden, auf der Basis welcher Streckeninformationen welcher Teil der manuellen Fahrstrategie gebildet wird und andererseits können die bestimmten Merkmale in verbesserter Weise mit abgespeicherten Merkmalen verglichen bzw. abgeglichen werden. Die abgespeicherten Merkmale können beispielsweise in einem Kartenspeicher vorgehalten sein.

In einer Variante können ein bestimmtes Merkmal und die der Bestimmung des Merkmals zugrundeliegenden abgetasteten Informationen dem Fahrer dargeboten werden und es kann eine Bestätigung der Bestimmung abgetastet werden. Auf diese Weise kann der Fahrer die Merkmalsbestimmung während oder nach der Fahrt nachvollziehen und durch seine Bestätigung bzw. ausbleibende Bestätigung bewerten. Dadurch kann in folgenden, ähnlich gelagerten Fällen eine verbesserte Bestimmung von Merkmalen aus abgetasteten Informationen durchgeführt werden.

In einer Variante kann bereits als Bestätigung der Bestimmung des Merkmals angesehen werden, wenn die automatische Fahrstrategie, die auf der Basis des bestimmten Merkmals bestimmt wurde, sich mit der manuellen Fahrstrategie des Fahrers deckt.

In noch einer weiteren Ausführungsform können die bestimmten Merkmale außerhalb des Kraftfahrzeugs verfügbar gemacht werden. So können insbesondere aktuelle Strecken- und Umgebungsinformationen auch anderen Kraftfahrzeugen bereitgestellt werden. In entsprechender Weise können Strecken- und Umgebungsinformationen von anderen Kraftfahrzeugen empfangen und zur Bestimmung der Fahrstrategie oder der Wegwahl auf einer anderen Strecke verwendet werden.

In einer Ausführungsform werden Merkmale, die auf der Basis von Strecken- und Umgebungsinformationen bestimmt sind, von einer externen Infrastruktur empfangen, wobei die Fahrstrategie auf der Basis der bestimmten Merkmale bestimmt wird. Bevorzugterweise wird die Fahrstrategie auf der Basis der Merkmale seitens des Kraftfahrzeugs bestimmt. In einer weiteren Ausführungsform kann jedoch die Fahrstrategie auch seitens der Infrastruktur bestimmt und danach an das Kraftfahrzeug übermittelt werden. Die externe Infrastruktur kann einen zentralen Server oder einen Dienst in einer so genannten Cloud umfassen. In Verbindung mit der letztgenannten Variante kann so ein bidirektionaler Austausch von Merkmalen zwischen Kraftfahrzeugen erfolgen, um die zu Merkmalen vorverarbeiteten Strecken- und Umgebungsinformationen verbessert austauschen zu können.

In einer Ausführungsform wird das automatische Befahren der Strecke nur innerhalb eines vorbestimmten Zeitraums nach dem letzten Befahren ermöglicht. Dabei kann optional zwischen einem manuellen und einem automatisierten Befahren unterschieden werden. Auf diese Weise kann sichergestellt werden, dass veraltete Strecken- und Umgebungsinformationen nicht zum Bestimmen der automatischen Fahrstrategie verwendet werden.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Eine Vorrichtung zur automatischen Befahrung einer vorbestimmten Strecke umfasst eine Abtasteinrichtung zur Abtastung von Strecken- und Umgebungsinformationen, während die Strecke manuell befahren wird, und eine Verarbeitungseinrichtung zum Bestimmen einer manuellen Fahrstrategie anhand der abgetasteten Strecken- und Umgebungsinformationen, wobei die manuelle Fahrstrategie durch einen Fahrer eines Kraftfahrzeugs verfolgt wird, während er eine vorbestimmte Strecke ohne aktive Eingriffe durch die Vorrichtung, befährt und zur Planung einer automatischen Fahrstrategie für eine spätere automatisierte Zielführung auf der Basis der abgetasteten Informationen, wobei die manuelle Fahrstrategie und die automatische Fahrstrategie jeweils eine vorbestimmte Reihenfolge von Wegabschnitten sowie lokale Fahrentscheidungen umfassen. Dabei ist die Verarbeitungseinrichtung dazu eingerichtet, die automatische Fahrstrategie mit der manuellen Fahrstrategie zu vergleichen und ein automatisches Befahren der Strecke auf der Basis der automatischen Fahrstrategie durchzuführen, wenn sich die automatische Fahrstrategie weniger als ein vorbestimmtes Maß von der manuellen Fahrstrategie unterscheidet.

### Kurze Beschreibung der Figuren

Die Erfindung wird nun mit Bezug auf die beigefügten Figuren genauer beschrieben, in denen:
- Figur 1: eine Vorrichtung zum Ermöglichen eines automatischen Befahrens einer vorbestimmten Strecke;
- Figur 2: ein Ablaufdiagramm eines Verfahrens zum Ermöglichen eines automatischen Befahrens einer vorbestimmten Strecke, und
- Figur 3: eine beispielhafte Darstellung eines schematischen Befahrens einer vorbestimmten Strecke
darstellt.

### Genaue Beschreibung von Ausführungsbeispielen

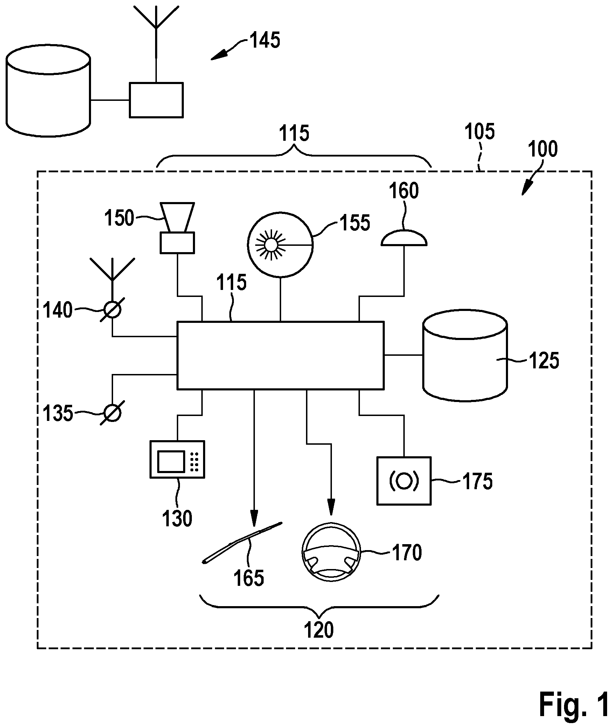

Figur 1 zeigt eine Vorrichtung 100 an Bord eines Kraftfahrzeugs 105. Die Vorrichtung 100 ist dazu eingerichtet, ein automatisches Befahren einer vorbestimmten Strecke zu ermöglichen. Dazu umfasst die Vorrichtung 100 eine Verarbeitungseinrichtung 112, die mit einer Anzahl Sensoren 115 und gegebenenfalls auch Aktoren 120, sowie vorzugsweise einem Speicher 125 verbunden ist. Bevorzugterweise ist ferner ein Bedienelement 130 zur Interaktion mit einem Fahrer des Kraftfahrzeugs 105 vorgesehen. Anstelle des Bedienelements 130 kann auch eine erste Schnittstelle 135 vorgesehen sein, über die ein anderes Gerät, beispielsweise ein Smartphone, ein tragbarer Computer oder ein Tabloid-PC als Bedienelement 130 angebunden werden kann. Darüber hinaus kann eine zweite Schnittstelle 140 vorgesehen sein, um eine Datenverbindung mit einer externen Infrastruktur 145 zu etablieren. Die externe Infrastruktur 145 kann ein zentraler Server, ein Netzwerk von Servern oder ein loser Zusammenschluss von datentechnisch vernetzten Servern sein. Zusätzlich oder alternativ kann die externe Infrastruktur 145 auch eines oder mehrere Kraftfahrzeuge 105 umfassen.

In exemplarischen Weise umfassen die Sensoren 115 in der Darstellung von Figur 1 eine Kamera 150 zur Aufnahme eines optischen Bildes in der Umgebung des Kraftfahrzeugs 105, einen Laserscanner 155 zur Abtastung von Entfernungen zu Objekten in der Umgebung des Kraftfahrzeugs 105 und einen Navigationsempfänger 160 zur Bestimmung der Position des Kraftfahrzeugs 105. Der Navigationsempfänger 160 kann insbesondere einen Empfänger für Signale eines satellitengestützten Navigationssystems umfassen. Auf der Basis der mittels der Sensoren 115 abgetasteten Informationen bestimmt die Verarbeitungseinrichtung 112 eine automatische Fahrstrategie. Die Fahrstrategie umfasst eine Fahrstrecke, die durch Benutzung von vorbestimmten Wegabschnitten in einer vorbestimmten Reihenfolge charakterisiert ist, und lokale Fahrentscheidungen, wie beispielsweise eine Spurwahl, eine Umfahrung eines Hindernisses oder eine Reaktion auf eine dynamische Streckensteuerung, beispielsweise in Form einer Ampel.

In einer Ausführungsform ist die Verarbeitungseinrichtung 112 auch dazu eingerichtet, das automatische Befahren der vorbestimmten Strecke durch das Kraftfahrzeug 105 zu steuern. Die Aktoren 120 können zu diesem Zweck eine Geschwindigkeitssteuerung 165, eine Richtungssteuerung 170 und eine Verzögerungssteuerung 175 umfassen. Die Steuerung des Kraftfahrzeugs 105 erfolgt in Abhängigkeit der bestimmten automatischen Fahrstrategie durch entsprechendes Beeinflussen der Aktoren 120.

Sowohl die Sensoren 115 als auch die Aktoren 120 können dazu verwendet werden, eine manuelle Fahrstrategie zu bestimmen, die ein Fahrer des Kraftfahrzeugs 105 verfolgt, während er eine vorbestimmte Strecke manuell, also ohne aktive Eingriffe durch die Vorrichtung 100, befährt. Beispielsweise kann mittels des Navigationsempfängers 160 eine Streckenwahl des Fahrers bestimmt werden und mittels eines Abtastens von Lenkbewegungen an der Richtungssteuerung 170 können eine Spurwahl oder ein Kurvenradius bestimmt werden.

Sowohl die Sensoren 115 als auch die Aktoren 120, die in Figur 1 dargestellt sind, sind lediglich Beispiele für verwendbare Sensoren und Aktoren. In anderen Ausführungsformen können andere Sensoren 115 oder Aktoren 120 zusätzlich oder alternativ zu den dargestellten verwendet werden.

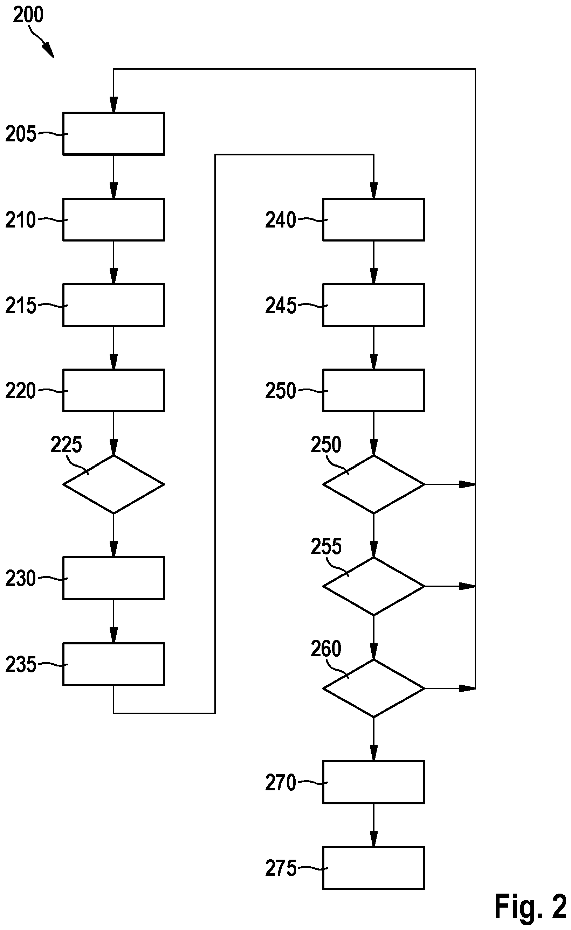

Figur 2 zeigt ein schematisches Ablaufdiagramm eines Verfahrens 200 zum Ermöglichen eines automatischen Befahrens einer vorbestimmten Strecke. Das Verfahren 200 ist insbesondere zum Ablauf auf der Verarbeitungseinrichtung 112 von Figur 1 eingerichtet.

In einem ersten Schritt 205 wird das Befahren einer vorbestimmten Strecke erfasst. Die vorbestimmte Strecke ist vorzugsweise dadurch gekennzeichnet, dass sie häufig, weiter bevorzugt regelmäßig, befahren wird. Insbesondere kann eine Strecke, die regelmäßig zu einer ersten vorbestimmten Tageszeit in einer ersten Richtung und zu einer zweiten vorbestimmten Zeit in der Gegenrichtung befahren wird, als vorbestimmte Strecke dienen. Eine solche Strecke wird beispielsweise von einem Pendler zwischen seinem Wohnort und seinem Arbeitsplatz befahren, es sind aber auch andere, häufig benutzte Strecken möglich. In einer Variante können auch unterschiedliche Hin- und Rückwege unterstützt werden.

In einem folgenden Schritt 210 wird während des manuellen Befahrens der vorbestimmten Strecke die Umgebung des Kraftfahrzeugs 105 abgetastet. Dafür können insbesondere die Signale der Sensoren 115 ausgewertet werden. Gegebenenfalls können auch Eingriffe des Fahrers mittels eines der Aktoren 120 abgetastet werden. Die Aktoren 120 können dafür als Sensoren 115 konfiguriert sein oder es können entsprechende Sensoren 120 ohne Aktorfunktion verwendet werden. In einer Ausführungsform werden die abgetasteten Signale mit Informationen aus dem Speicher 125 korreliert, beispielsweise einem Schwellenwert oder einem Betätigungsprofil.

In einem Schritt 215 werden auf der Basis der abgetasteten Informationen Merkmale der Umgebung des Kraftfahrzeugs 105 bestimmt. Aus den abgetasteten Strecken- und Umgebungsinformationen werden beispielsweise Merkmale wie eine Streckenführung, eine Streckenwahl, eine lokale Verkehrsregelung, eine aktuelle Verkehrsregelung, ein temporäres Hindernis und andere relevante Merkmale bestimmt. In einem optionalen Schritt 220 können ein bestimmtes Merkmal und die Informationen, auf deren Basis es bestimmt wurde, dem Fahrer des Kraftfahrzeugs 105 dargeboten werden. Im dargestellten Ablaufdiagramm erfolgt dies bevorzugterweise während des manuellen Befahrens der vorbestimmten Strecke, in einer anderen Ausführungsform können sowohl die Informationen als auch das bestimmte Merkmal auch abgespeichert und zu einem späteren Zeitpunkt dem Fahrer zur Bestätigung oder Korrektur vorgelegt werden. Die Bestätigung durch den Fahrer kann insbesondere manuell erfolgen. Beispielsweise kann ein erkanntes Merkmal eine Ampel mit einer aktuellen Signalfarbe umfassen. Eine stilisiert dargestellte Ampel kann dem Fahrer dargeboten werden und der Fahrer kann das erkannte Merkmal beispielsweise durch einen Tastendruck als korrekt oder inkorrekt klassifizieren.

In einer weiteren Ausführungsform können mehrere mögliche Merkmale auf der Basis der gleichen Informationen bestimmt werden und der Fahrer kann eine Auswahl des korrekten Merkmals treffen. In noch einer weiteren Ausführungsform kann der Fahrer auch dazu aufgefordert werden, ein nicht erkanntes Merkmal auf der Basis von als relevant erkannten Informationen selbst zu einem Merkmal zu klassifizieren.

In einem Schritt 225 wird gegebenenfalls überprüft, ob das fragliche Merkmal korrekt erkannt wurde. Außer in der oben beschriebenen Weise durch aktives Eingreifen des Fahrers kann ein korrektes Erkennen des Merkmals auch dadurch bestätigt werden, dass es zu einer automatischen Fahrstrategie führt, die sich mit der manuellen Fahrstrategie des Fahrers deckt, wie unten mit Bezug auf Schritt 250 noch genauer beschrieben wird. In einem optionalen Schritt 230 kann das erfasste Merkmal bereitgestellt werden, beispielsweise mittels der zweiten Schnittstelle 140 an die externe Infrastruktur 145. In entsprechender Weise kann auch in einem ebenfalls optionalen Schritt 235 ein Merkmal von der externen Infrastruktur 145 empfangen werden. Auf der Basis der bestimmten Merkmale wird in einem Schritt 240 eine automatische Fahrstrategie bestimmt. Ferner wird in einem Schritt 245 die manuelle Fahrstrategie abgetastet, die der Fahrer beim Befahren der Strecke verfolgt. Dazu kann auf Informationen der Sensoren 115 und der Aktoren 120 zurückgegriffen werden.

In einem Schritt 250 werden die automatische Fahrstrategie und die manuelle Fahrstrategie miteinander verglichen. In einem Schritt 255 wird dann überprüft, ob eine Abweichung der Fahrstrategien einen vorbestimmten Schwellenwert übersteigt. Ist dies nicht der Fall, so kann das Verfahren 200 zum Anfang zurücckehren und erneut durchlaufen. Andernfalls kann in einem optionalen Schritt 260 überprüft werden, ob die vorbestimmte Strecke öfter als eine vorbestimmte Anzahl befahren wurde. Es kann auch in einem Schritt 265 überprüft werden, ob die letzte Fahrt auf der vorbestimmten Strecke kürzer als eine vorbestimmte Zeit zurückliegt. Wird eine der Fragen der Schritte 260 oder 265 negativ beantwortet, so kann das Verfahren 200 zum Anfang zurückkehren und erneut durchlaufen. Andernfalls kann in einem Schritt 270 das automatische Befahren der vorbestimmten Strecke ermöglicht werden. Optional kann das automatische Befahren in einem Schritt 275 auch im Rahmen des Verfahrens 200 durchgeführt werden.

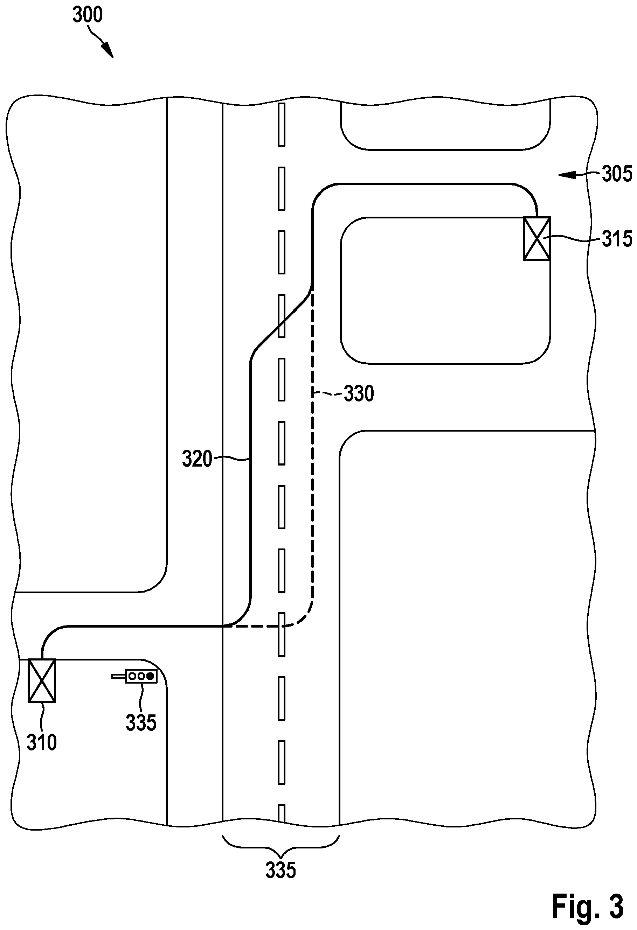

Figur 3 zeigt eine beispielhafte Darstellung 300 eines Befahrens einer vorbestimmten Strecke 305 zwischen einem Startort 310 und einem Zielort 315. Eine erste Fahrstrategie 320 kann beispielsweise manuell und eine zweite Fahrstrategie 330 automatisch bestimmt sein. Die beiden Fahrstrategien 320 und 330 unterscheiden sich in der vorliegenden Darstellung durch eine Spurwahl im vertikalen Abschnitt der Strecke 305. Beide Fahrstrategien sind auf der Basis von Merkmalen 335 gebildet, von denen hier nur beispielhaft eine Ampel und eine zweispurige Fahrstrecke dargestellt sind.

Der vorliegende Unterschied zwischen den Fahrstrategien 320 und 330 kann als ausreichend gering eingestuft werden, um ein Fahren vom dem Startort 310 zum Zielort 315 mit einer automatisierten Fahrfunktion, insbesondere einem Längs- und Quersteuerungssystem an Bord des Kraftfahrzeugs 105, zu ermöglichen.

## Patentansprüche

1. Verfahren (200) zum automatischen Befahren einer vorbestimmten Stecke, folgende Schritte umfassend:
- Abtasten (210) von Strecken (305)- und Umgebungsinformationen mittels eines Sensors (115) und/oder einer Abtasteinrichtung (115), während die Strecke (305) manuell befahren wird zur Bestimmung einer manuellen Fahrstrategie (320), die ein Fahrer eines Kraftfahrzeugs (105) verfolgt, während er eine vorbestimmte Strecke ohne aktive Eingriffe durch eine Vorrichtung (100) befährt;
- Planen (240) einer automatischen Fahrstrategie (330) für eine spätere automatisierte Zielführung mittels einer Verarbeitungseinrichtung (112) auf der Basis der abgetasteten Informationen;
- wobei die manuelle Fahrstrategie (320) und die automatische Fahrstrategie (330) jeweils eine vorbestimmte Reihenfolge von Wegabschnitten sowie lokale Fahrentscheidungen umfassen,
- Vergleichen (250) der automatischen Fahrstrategie (330) mit der manuellen Fahrstrategie (320),
- Durchführen des automatischen Befahren der Strecke (305) auf der Basis der automatischen Fahrstrategie (330), wenn sich die automatische Fahrstrategie (330) weniger als ein vorbestimmtes Maß von der manuellen Fahrstrategie (320) unterscheidet.

2. Verfahren (200) nach Anspruch 1, wobei das automatische Befahren erst ermöglicht (270) wird, wenn die Strecke (305) wenigstens einmal vollständig manuell befahren (260) wurde.

3. Verfahren (200) nach Anspruch 2, wobei die Strecke (305) öfter als eine vorbestimmte Anzahl manuell befahren (260) wird.

4. Verfahren (200) nach einem der vorangehenden Ansprüche, wobei aus den abgetasteten Informationen Merkmale (335) bestimmt (215) werden und die Fahrstrategie (330) auf der Basis der bestimmten Merkmale (335) bestimmt (240) wird.

5. Verfahren (200) nach Anspruch 4, wobei ein bestimmtes Merkmal (335) und die der Bestimmung des Merkmals (335) zu Grunde liegenden abgetasteten Informationen dem Fahrer dargeboten (220) werden und eine Bestätigung der Bestimmung abgetastet (225) wird.

6. Verfahren (200) nach einem der Ansprüche 4 oder 5, wobei die bestimmten Merkmale (335) außerhalb des Kraftfahrzeugs verfügbar gemacht (230) werden.

7. Verfahren (200) nach einem der vorangehenden Ansprüche, wobei Merkmale (335), die auf der Basis von Strecken (305)- und Umgebungsinformationen bestimmt sind, von einer externen Infrastruktur (145) empfangen werden und die Fahrstrategie (330) auf der Basis der bestimmten Merkmale (335) bestimmt (240) wird.

8. Verfahren (200) nach einem der vorangehenden Ansprüche, wobei das automatische Befahren der Strecke (305) nur innerhalb eines vorbestimmten Zeitraums nach dem letzten Befahren ermöglicht (265) wird.

9. Verfahren (200) nach einem der vorangehenden Ansprüche, wobei sowohl für die manuelle Fahrstrategie (320) als auch für die automatische Fahrstrategie (330) durch die vorbestimmten Wegabschnitte in der vorbestimmten Reihenfolge eine Fahrstrecke charakterisiert ist, wobei für den Vergleich, ob sich die automatische Fahrstrategie (330) weniger als ein vorbestimmtes Maß von der manuellen Fahrstrategie (320) unterscheidet ein Abstand zwischen den Fahrstrecken ausgewertet wird.

10. Verfahren (200) nach einem der vorangehenden Ansprüche, wobei sich die beiden Fahrstrategien (320) und (330) durch eine Spurwahl unterscheiden.

11. Computerprogrammprodukt mit Programmcodemitteln zur Durchführung des Verfahrens (200) nach einem der vorangehenden Ansprüche, wenn das Computerprogrammprodukt auf einer Verarbeitungseinrichtung (112) abläuft oder auf einem computerlesbaren Datenträger gespeichert ist.

12. Vorrichtung (100) zur automatischen Befahrung einer vorbestimmten Stecke, folgende Elemente umfassend:
- eine Abtasteinrichtung (115) zur Abtastung von Strecken (305)- und Umgebungsinformationen, während die Strecke (305) manuell befahren wird;
- eine Verarbeitungseinrichtung (112) zum Bestimmen einer manuellen Fahrstrategie (320) anhand der abgetasteten Strecken (305)- und Umgebungsinformationen, wobei die manuelle Fahrstrategie durch einen Fahrer eines Kraftfahrzeugs (105) verfolgt wird, während er eine vorbestimmte Strecke ohne aktive Eingriffe durch die Vorrichtung (100), befährt und zur Planung einer automatischen Fahrstrategie (330) für eine spätere automatisierte Zielführung auf der Basis der abgetasteten Informationen;
- wobei die manuelle Fahrstrategie (320) und die automatische Fahrstrategie (330) jeweils eine vorbestimmte Reihenfolge von Wegabschnitten sowie lokale Fahrentscheidungen umfassen;
- wobei die Verarbeitungseinrichtung (112) dazu eingerichtet ist, die automatische Fahrstrategie (330) mit der manuellen Fahrstrategie (320) zu vergleichen,
- wobei ein automatisches Befahren der Strecke (305) auf der Basis der automatischen Fahrstrategie (330) durchgeführt wird, wenn sich die automatische Fahrstrategie (330) weniger als ein vorbestimmtes Maß von der manuellen Fahrstrategie (320) unterscheidet.

13. Vorrichtung (100) nach Anspruch 12, sowohl für die manuelle Fahrstrategie (320) als auch für die automatische Fahrstrategie (330), wobei durch die vorbestimmten Wegabschnitte in der vorbestimmten Reihenfolge eine Fahrstrecke charakterisiert ist, wobei die Verarbeitungsvorrichtung (112) eingerichtet ist, für den Vergleich, ob sich die automatische Fahrstrategie (330) weniger als ein vorbestimmtes Maß von der manuellen Fahrstrategie (320) unterscheidet, einen Abstand zwischen den Fahrstrecken auszuwerten.

## Claims

1. Method (200) for automatically travelling along a predetermined route, comprising the following steps:
- sensing (210) routes (305) and surroundings information by means of sensor (115) and/or a sensing device (115) while the route (305) is travelled along manually, in order to determine a manual driving strategy (320) which a driver of a motor vehicle (105) pursues while he travels along a predetermined route without active interventions by a device (100);
- planning (240) an automatic driving strategy (330) for later automated route guidance by means of a processing device (112) on the basis of the scanned information;
- wherein the manual driving strategy (320) and the automatic driving strategy (330) each comprise a predetermined sequence of travel sections and local driving decisions,
- comparing (250) the automatic driving strategy (330) with the manual driving strategy (320),
- carrying out the automatic travelling along the route (305) on the basis of the automatic driving strategy (330) if the automatic driving strategy (330) differs from the manual driving strategy (320) by less than a predetermined extent.

2. Method (200) according to Claim 1, wherein the automatic travel is not made possible (270) until the route (305) has been completely travelled along (260) manually at least once.

3. Method (200) according to Claim 2, wherein the route (305) is travelled along (260) manually more often than a predetermined number.

4. Method (200) according to one of the preceding claims, wherein features (335) are determined (215) from the scanned information, and the driving strategy (330) is determined (240) on the basis of the determined features (335).

5. Method (200) according to Claim 4, wherein a determined feature (335) and the scanned information on which the determination of the feature (335) is based is offered (220) to the driver, and confirmation of the determination is sensed (225).

6. Method (200) according to one of Claims 5 and 6, wherein the determined features (335) are made available (230) outside the motor vehicle.

7. Method (200) according to one of the preceding claims, wherein features (335) which are determined on the basis of route information (305) and surroundings information are received by external infrastructure (145), and the driving strategy (330) is determined (240) on the basis of the determined features (335).

8. Method (200) according to one of the preceding claims, wherein the automatic travelling along the route (305) is made possible (265) only within a predetermined time period after the last travelling operation.

9. Method (200) according to one of the preceding claims, wherein both with a manual driving strategy (320) and for the automatic driving strategy (330) a driving route is **characterized by** the predetermined travel sections in the predetermined sequence, wherein a distance between the driving routes is evaluated for the comparison as to whether the automatic driving strategy (330) differs from the manual driving strategy (320) by less than a predetermined extent.

10. Method (200) according to one of the preceding claims, wherein the two driving strategies (320) and (330) differ through a choice of lane.

11. Computer programme product having programme code means for carrying out the method (200) according to one of the preceding claims when the computer programme product runs on a processing device (112) or is stored on a computer-readable data carrier.

12. Device (100) for automatically travelling along a predetermined route comprising the following elements:
- a sensing device (115) for sensing routes (305) and surroundings information while the route (305) is travelled along manually;
- a processing device (112) for determining a manual driving strategy (320) by means of the sensed routes (305) and surroundings information, wherein the manual driving strategy is pursued by a driver of a motor vehicle (105) while he travels along a predetermined route without active interventions by the device (100), and for planning an automatic driving strategy (330) for later automated guidance on the basis of the sensed information;
- wherein the manual driving strategy (320) and the automatic driving strategy (330) each comprise a predetermined sequence of travel sections and local driving decisions;
- wherein the processing device (112) is configured to compare the automatic driving strategy (330) with the manual driving strategy (320),
- wherein automatic traveling along the route (305) is carried out on the basis of the automatic driving strategy (330)
if the automatic driving strategy (330) differs from the manual driving strategy (320) by less than a predetermined extent.

13. Device (100) according to Claim 12, both for the manual driving strategy (320) and for the automatic driving strategy (330), wherein a driving route is **characterized by** the predetermined travel sections in the predetermined sequence, wherein the processing device (112) is configured to evaluate a distance between the driving routes for the comparison as to whether the automatic driving strategy (330) differs from the manual driving strategy (320) by less than a predetermined extent.

## Revendications

1. Procédé (200) de parcours automatique d'un itinéraire prédéterminé, comprenant les étapes consistant à:
- balayer (210) des informations de voies (305) et environnementales à l'aide d'un capteur (115) et/ou d'un dispositif de balayage (115), tandis que la voie (305) est parcourue manuellement pour déterminer une stratégie de conduite manuelle (320), qui suit le conducteur d'un véhicule automobile (105) pendant qu'il se déplace sur un itinéraire prédéterminé sans intervention active d'un dispositif (100);
- programmer (240) une stratégie de conduite automatique (330) pour un guidage d'itinéraire automatisé ultérieur au moyen d'un dispositif de traitement (112) sur la base des informations échantillonnées;
- dans lequel la stratégie de conduite manuelle (320) et la stratégie de conduite automatique (330) comprennent chacune une séquence prédéterminée de sections de route afin de prendre des décisions de conduite locales,
- comparer (250) la stratégie de conduite automatique (330) à la stratégie de conduite manuelle (320),
- effectuer le parcours automatique de l'itinéraire (305) sur la base de la stratégie de conduite automatique (330) lorsque la stratégie de conduite automatique (330) diffère moins d'une proportion prédéterminée de la stratégie de conduite manuelle (320).

2. Procédé (200) selon la revendication 1, dans lequel la conduite automatique est activée (270), lorsque l'itinéraire (305) est parcouru au moins une fois entièrement manuellement (260).

3. Procédé (200) selon la revendication 2, dans lequel l'itinéraire (305) est parcouru manuellement plus souvent (260) qu'un nombre prédéterminé de fois.

4. Procédé (200) selon une des revendications précédentes, dans lequel les caractéristiques (335) sont déterminées à partir de l'information échantillonnée (215) et la stratégie de conduite (330) est déterminée (240) sur la base des caractéristiques déterminées (335).

5. Procédé (200) selon la revendication 4, dans lequel une caractéristique particulière (335) et les informations échantillonnées sous-jacentes à la détermination de la caractéristique (335) sont présentées au conducteur (220) et un accusé de réception de la détermination est échantillonné (225).

6. Procédé (200) selon une quelconque des revendications 4 ou 5, dans lequel les caractéristiques déterminées (335) sont mises à disposition à l'extérieur du véhicule automobile (230).

7. Procédé (200) selon une quelconque des revendications précédentes, dans lequel des caractéristiques (335) déterminées des informations de voies (305) et environnementales sont reçues d'une infrastructure externe (145) et la stratégie de conduite (330) est déterminée (240) sur la base des caractéristiques particulières (335).

8. Procédé (200) selon une quelconque des revendications précédentes, dans lequel la conduite automatique de l'itinéraire (305) est possible uniquement dans une plage prédéterminée après le dernier parcours (265).

9. Procédé (200) selon une des revendications précédentes, dans lequel à la fois pour la stratégie de conduite manuelle (320) et pour la stratégie de conduite automatique (330) à travers les sections de route prédéterminées dans la séquence prédéterminée, une voie de parcours est **caractérisée**, dans lequel si la stratégie de conduite automatique (330) diffère de moins d'une valeur prédéterminée de la stratégie de conduite manuelle (320), une distance entre les itinéraires de conduite est évaluée.

10. Procédé (200) selon une des revendications précédentes, dans lequel les deux stratégies de conduite (320) et (330) diffèrent par une sélection de piste.

11. Produit de programme informatique avec des moyens de code de programme pour mettre en œuvre un procédé (200) selon une quelconque des revendications précédentes, lorsque le programme informatique fonctionne sur un dispositif de traitement (112) ou est mémorisé sur un support lisible par ordinateur.

12. Dispositif (100) pour suivre automatiquement un itinéraire prédéterminé, comprenant les éléments suivants:
- un dispositif de balayage (115) pour balayer des informations de voies (305) et environnementales tout en parcourant manuellement l'itinéraire (305);
- un dispositif de traitement (112) pour déterminer une stratégie de conduite manuelle (320) sur la base des itinéraires balayés (305) et des informations sur l'environnement, dans lequel la stratégie de conduite manuelle est déterminée par une stratégie de conduite d'un véhicule automatique (105) tout en parcourant un itinéraire prédéterminé sans intervention active du dispositif (100) et en planifiant une stratégie de conduite automatique (330) pour un guidage d'itinéraire automatisé ultérieur basé sur les informations échantillonnées;
- dans lequel la stratégie de conduite manuelle (320) et la stratégie de conduite automatique (330) comprennent chacune une séquence prédéterminée de sections de route ainsi que des décisions de conduite locales;
- dans lequel le moyen de traitement (112) est agencé pour comparer la stratégie de conduite automatique (330) à la stratégie de conduite manuelle (320),
- dans lequel le parcours automatique de l'itinéraire (305) est effectué sur la base de la stratégie de conduite automatique (330) lorsque la stratégie de conduite (330) diffère moins d'une proportion prédéterminée de la stratégie de conduite manuelle (320).

13. Dispositif (100) selon la revendication 12, tant pour la stratégie de conduite manuelle (320) que pour la stratégie de conduite automatique (330), dans lequel un itinéraire est **caractérisé par** les sections d'itinéraire prédéterminées dans l'ordre prédéterminé, dans lequel le dispositif de traitement (112) est configuré, à titre de comparaison, si la stratégie de conduite automatique (330) diffère moins d'une proportion prédéterminée de la stratégie de conduite manuelle (320) pour évaluer une distance entre les itinéraires de conduite.
